# EUROPÄISCHE PATENTANMELDUNG

(11) **EP 0 762 008 A1**
(43) Veröffentlichungstag der Anmeldung: **12.03.1997**
(21) Anmeldenummer: 96112421.1
(22) Anmeldetag: 01.08.1996
(51) Int. Cl.: F16D 66/02, F16D 55/22

(54) **Bremssattel mit Masseanschluss und Halterung für Warnkontaktstecker**

(30) Priorität: 12.09.1995 DE 19533629
(71) Anmelder: ITT Automotive Europe GmbH, 60488 Frankfurt am Main (DE)
(72) Erfinder: Wohlmann, Uwe, 63939 Wörth/Main (DE); Hendrich, Uwe, 61449 Steinbach (DE)

(57) **Zusammenfassung**

Gegenstand der Erfindung ist ein Bremssattel (1) für Teilbelagscheibenbremsen, insbesondere für Kraftfahrzeuge, mit einem Gehäuse (2, 3, 4, 5), zwei Bremsbacken (7, 8) und einer Reibbelag-Warneinrichtung (18), die eine Abnutzung eines Reibbelages (11, 12) an zumindest einer der Bremsbacken (7, 8) anzeigt und wenigstens einen am Bremssattel (1) geführten eklektrischen Leiter (19) aufweist, der von der zumindest einen Bremsbacke (7, 8) über einen Warnkontaktstecker (20) zu einer Anzeigeeinrichtung führt. Der Bremssattel (1) umfaßt dabei eine Halterung (25, 36, 47, 53) für zumindest den Warnkontaktstecker (20) und ist mit wenigstens einem Masseanschluß (29, 38, 45, 46) für die Masseversorgung einer Bremsscheibe versehen.

## Beschreibung

Die Erfindung betrifft einen Bremssattel für Teilbelagscheibenbremsen, inbesondere für Kraftfahrzeuge, mit einer Reibbelag-Warneinrichtung und einer Halterung für einen Warnkontaktstecker gemäß dem Oberbegriff von Anspruch 1.

Ein Bremsssattel für Teilbelagscheibenbremsen mit einem Gehäuse, in dessen Schacht zwei Bremsbacken von zwei Stiften gehalten und geführt sowie durch eine Feder klapperfrei gegen die Haltestifte verspannt werden, ist zum Beispiel aus der Deutschen Patentanmeldung DE 39 17 125 bekannt. Dabei sind die Bremsbacken mit einer Reibbelag-Warneinrichtung versehen, die über einen in den Bremsbelägen angeordneten Verschleißfühler, einen elektrischen Leiter und einen Warnkontaktstekker an einer Einrichtung den Verschleiß der Reibbeläge anzeigt, damit diese rechtzeitig ausgewechselt und ein Versagen der Bremsen vermieden werden kann. Um eine Beschädigung des elektrischen Leiters durch die Radfelge oder die Scheibenbremse zu verhindern, wenn das Warnkabel lose zwischen der Bremse und der Felge hängt, ist am Bremssattel eine Halterung für den elektrischen Leiter vorgesehen, durch die das Warnkabel gehalten und geführt wird.

Die Deutsche Patentanmeldung DE 40 27 944 offenbart neben der Führung des elektrischen Leiters einen am Bremssattel lösbar befestigten Haltewinkel für den Warnkontaktstecker, wobei der Haltewinkel gleichzeitig zur Aufnahme und Halterung eines Bremsschlauchs dient.

Bei diesen Bremssätteln besteht der elektrische Leiter der Reibbelag-Warneinrichtung aus zwei einzelnen isolierten Warndrähten, die vom Verschleißfühler zur Anzeigeeinrichtung führen. Es sind zwei verschiedene Meßverfahren für den Belagverschleiß bekannt. Zum einen wird bei der Abnutzung des Reibbelages ein die beiden Warndrähte verbindendes und im Fühler befindliches elektrisches Kabel von der Bremsscheibe durchtrennt, wodurch ein Stromfluß unterbrochen und eine elektrische Anzeige ausgelöst wird. Zum anderen stellt die Bremsscheibe bei Belagverschleiß eine leitende Verbindung von zwei gegeneinander isolierten Massekabeln her, wobei ein Stromkreis geschlossen und die Anzeigeeinrichtung aktiviert wird.

Die Bremsscheibe selbst ist dabei nicht mit der Masse verbunden, da sie an einer Radaufhängung befestigt ist, die über Gummilager elastisch und gegenüber dem Massekreis eines Fahrzeuges elektrisch isoliert gelagert ist. Aus diesem Grunde kommt es bei dem letzteren Meßverfahren häufig zu Fehlfunktionen bei der Anzeige des Belagverschleißes, insbesondere zu einer verspäteten Anzeige.

Zur Verhinderung dieser Fehlfunktion der Belagverschleiß-Anzeigeeinrichtung ist vorgeschlagen worden, die Bremsscheibe über einen am Radträger befindlichen Steckkontakt mit dem Massekreis des Fahrzeuges zu verbinden. Diese Lösung ist jedoch sehr kostenintensiv, weil sie die Anzahl der Einzelteile eines Kraftfahrzeuges erhöht und desweiteren eine aufwendige Achskonstruktion zur Führung und Halterung des Massekabels erfordert.

Es ist deshalb die Aufgabe der vorliegenden Erfindung, die Bremsscheibe einer Kraftfahrzeugbremse zur sicheren Funktion der Reibbelag-Warneinrichtung mit dem Massekreis des Fahrzeuges auf einfache Art und Weise und kostengünstig elektrisch leitend zu verbinden.

Diese Aufgabe wird durch die im kennzeichnenden Teil von Anspruch 1 aufgeführten Merkmale gelöst.

Erfindungsgemäß ist ein Masseanschluß an einem Bremssattel für Teilbelagscheibenbremsen vorgesehen, wobei der Bremssattel im wesentlichen ein Gehäuse, eine Halterung für zumindest einen Warnkontaktstecker und zwei an Haltestiften geführte Bremsbacken umfaßt, die in wenigstens einem der Reibbeläge einen Fühler einer Warneinrichtung für die Anzeige des Belagverschleißes aufweisen. Der leicht mit dem Massekreis eines Kraftfahrzeuges verbindbare Masseanschluß sorgt dabei über den Bremssattel, einen Achsschenkel und ein Radlager in vorteilhafter Weise für den Masseschluß der Bremsscheibe. Auf diese Art und Weise wird erfindungsgemäß eine sichere Funktion der Reibbelag-Warneinrichtung gewährleistet. Ein weiterer Vorteil dieser Konstruktion liegt darin, daß anstatt eines Warnkabels mit zwei elektrischen Leitern lediglich ein Massekabel verwendet werden kann, so daß bei Abnutzung des Bremsbelages über den Kontakt der Bremsscheibe mit dem Massekabel ein Stromkreis geschlossen und eine Anzeigeeinrichtung aktiviert wird. Desweiteren wird der Nachteil einer aufwendigen und teuren Achskonstruktion zur Führung und Halterung des Massekabels im Falle eines am Radträger befindlichen Massekontaktes vermieden.

Mit Vorteil ist bei der vorliegenden Erfindung der Masseanschluß an der Halterung für den Warnkontaktstecker ausgebildet. Dadurch wird in zweckmäßiger Weise eine kostenintensive Bearbeitung des Sattelgehäuses und eine Erhöhung der Teilevielfalt verhindert. Besonders vorteilhaft ist dabei, daß die gleiche Halterung als in Massenproduktion hergestelltes Teil auch für Bremssättel verwendet werden kann, bei denen ein Masseschluß der Bremssscheibe für die Reibbelag-Warneinrichtung nicht erforderlich oder möglich ist, also beispielsweise bei Bremsscheiben aus Kohlefaserstoffen. Der Masseanschluß wird dann nicht mit dem Massekreis des Fahrzeuges verbunden und die Halterung dient lediglich zur Befestigung zumindest des Warnkontaktsteckers.

In der bevorzugten Ausführungsform der Erfindung ist als Halterung für den Warnkontaktstecker ein kostengünstig herstellbares, insbesondere gestanztes und gebogenes Halteblech vorgesehen. Der Masseanschluß wird vorzugsweise einstückig aus dem Blech gezogen, kann jedoch auch als separates Teil auf das Halteblech gelötet oder auf andere Art und Weise elektrisch leitend damit verbunden sein.

Dabei ist der Masseanschluß in vorteilhafter Weise am oberen Teil eines Basisabschnittes leicht zugänglich angeordnet. Das Halteblech umfaßt desweiteren einen sich vorzugsweise rechtwinklig aus dem Basisabschnitt erstreckenden ebenen Abschnitt, der mit einer Bohrung zur Befestigung des Halteblechs am Sattelgehäuse durch einer Schraube versehen ist. Aus einem Teil des Basisabschnittes ist ein U-förmiger Halteabschnitt ausgebildet, in dem der Warnkontaktstecker kraft- und formschlüssig sicher gehalten wird. Ein weiterer sich vorzugsweise rechtwinklig vom Basisabschnitt in entgegengesetzte Richtung zum Befestigungsabschnitt erstreckender Abschnitt ist mit zumindest einer halbkreisförmigen Öffnung für die Halterung eines weiteren Kabels, inbesondere eines ABS-Kabels, versehen. Bei entsprechender Dimensionierung des Halteblechs ist es jedoch auch möglich, an diesem Halteabschnitt mehrere Öffnungen für die Halterung weiterer Kabel oder Schläuche anzubringen. In der Ausgestaltung des erfindungsgemäßen Halteblechs liegt der besondere Vorteil, daß sich die einzelnen gehalterten Kabel und Schläuche nicht behindern und besonders übersichtlich angeordnet sind.

Um eine Bearbeitung des Gehäuses, zum Beispiel durch das Anbringen eines Gewindesacklochs für die Befestigungsschraube des Haltebleches zu vermeiden, ist bei einer anderen Ausführungsform des Bremssattels in vorteilhafter Weise als Warnkontaktsteckerhalterung ein einfach und kostengünstig zu fertigender Drahtclip vorgesehen, der vorzugsweise aus Federdraht gebogen wird.

Bei einer besonders zweckmäßigen Ausgestaltung dieses Federdrahtclips wird der erfindungsgemäße Masseanschluß durch mehrere hintereinanderliegende kreisförmige Drahtschlaufen gebildet. Der Federdrahtclip umfaßt desweiteren einen halbkreisförmigen Halteabschnitt für den Warnkontaktstecker und zumindest einen weiteren, ebenfalls halbkreisförmigen, Halteabschnitt für das ABS-Kabel oder andere Kabel bzw. Schläuche. In vorteilhafter Weise weist der Drahtclip zumindest eine Schlaufe und einen Vorsprung zu seiner Befestigung an vorhandenen Absätzen des Sattelgehäuses auf.

In einer weiteren Ausführungsform des Bremssattels ist der Masseanschluß gemäß der vorliegenden Erfindung an zumindest einem der Belaghaltestifte, aber vorzugsweise an beiden, ausgebildet.

Dabei wird der Masseanschluß durch eine am inneren Ende wenigstens eines Haltestiftes eingebrachte Bohrung vorgesehen. Diese Fertigungsart ist besonders einfach und kostengünstig, weil die jeweilige Bohrung bereits vor der Montage der Belaghaltestifte hergestellt werden kann. Falls der Durchmesser der Haltestifte aufgrund der Dimensionierung der Bremse für einen üblichen Masseanschluß nicht groß genug ist, kann das jeweilige Ende der Haltestifte mit einem entsprechenden Absatz mit einem größeren Durchmesser versehen werden.

Wenn sich der Masseanschluß an den Belaghaltestiften befindet, kann als Halterung für den Warnkontaktstecker ein einfacher aus Blech gestanzter und gebogener Haltewinkel verwendet werden. Dabei umfaßt der Haltewinkel einen Befestigungsabschnitt, einen U-förmigen Warnkontaktsteckerhalteabschnitt und zumindest einen weiteren Abschnitt zur Halterung weiterer Kabel und Schläuche.

Anstelle dieses Haltewinkels kann erfindungsgemäß auch ein maulschlüsselförmiger Halteclip vorgesehen werden, der vorzugsweise kostengünstig aus Kunststoff hergestellt ist. Der Halteclip umfaßt einen Befestigungsabschnitt und einen Halteabschnitt für den Warnkontaktstecker, wobei der Befestigungsabschnitt in vorteilhafter Weise an eine dafür vorgesehene Stelle hinter den Haltestiftabsatz mit dem größeren Durchmesser auf einen der beiden Belaghaltestifte geklemmt und dort sicher gehalten wird.

Nachfolgend werden verschiedene Ausführungsformen der vorliegenden Erfindung anhand der Zeichnungen näher erläutert. Es zeigen
- Fig. 1: eine Draufsicht auf eine bevorzugte Ausführungsform eines erfindungsgemäßen Bremssattels mit einem an einem Halteblech angeordneten Masseanschluß,
- Fig.2: den in Fig. 1 dargestellten Bremssattel in einer Seitenansicht,
- Fig. 3: eine perspektivische Darstellung des in den Fig. 1 und 2 gezeigten Halteblechs,
- Fig. 4: eine Draufsicht auf eine andere Ausführungsform eines Bremssattels mit einem in einem Drahtclip ausgebildeten Masseanschluß,
- Fig. 5: den in Fig. 4 dargestellten Bremssattel in einer Seienansicht,
- Fig. 6: eine perspektivische Darstellung des in den Fig. 4 und 5 gezeigten Drahtclips,
- Fig. 7: eine Draufsicht auf eine weitere Ausführungsform eines Bremssattels mit einem Haltewinkel und an Belaghaltestiften befindlichen Masseanschlüssen,
- Fig.8: den in Fig. 7 dargestellten Bremssattel in einer Seitenansicht,
- Fig. 9: eine Draufsicht auf eine weitere Ausführungsform eines Bremssattels mit einem Halteclip und an Belaghaltestiften befindlichen Masseanschlüssen,
- Fig.10: einen Teil des in Fig. 9 dargestellten Bremssattels in einer Seitenansicht und
- Fig.11: eine perspektivische Darstellung des in den Fig. 9 und 10 gezeigten Halteclips mit einem daran befestigten Warnkontaktstecker.

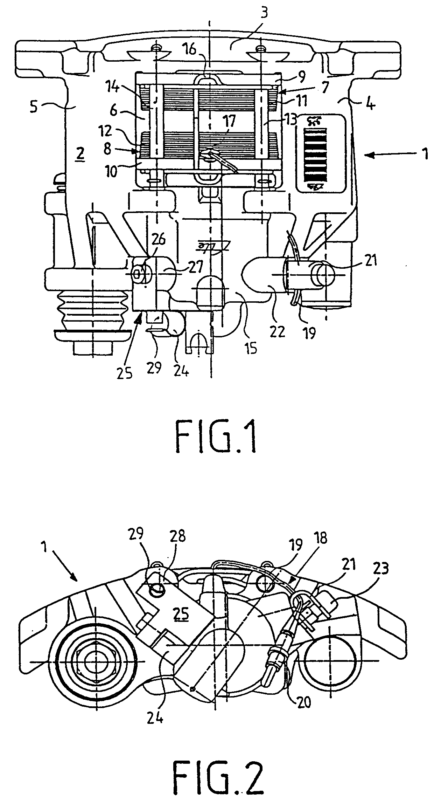

Fig. 1 und 2 zeigen eine bevorzugte Ausführungsform eines erfindungsgemäßen Bremssattels 1 für Teilbelagscheibenbremsen in einer Drauf- bzw. Seitenansicht. Der Bremssattel 1 weist ein Gehäuse 2 mit einem äußeren Schenkel 3 und zwei Brückenabschnitten 4, 5 auf, die einen Brückenschacht 6 begrenzen. In dem Schacht 6 sind zwei Bremsbacken 7, 8 angeordnet, die jeweils aus einer Trägerplatte 9, 10 und einem Reibbelag 11, 12 bestehen und über Haltestifte 13, 14 geführt werden. Beim Bremsen wird zumindest der Belag 12 der inneren Bremsbacke 8 über einen Hydraulikzylinder 15 direkt gegen eine nicht dargestellte Bremsscheibe gedrückt, die sich zwischen den Bremsbacken 7, 8 befindet. Eine Feder 16 verspannt die Bremsbacken 7, 8 gegen die Stifte 13, 14, um ein beim Bremsvorgang durch die Relativbewegung zwischen den Backen 7, 8 und den Haltestiften 13, 14 entstehendes Geräusch zu dämpfen.

Vorzugsweise im inneren Reibbelag 12 befindet sich ein Belagverschleißfühler 17 einer Reibbelag-Warneinrichtung 18, wobei ein elektrischer Leiter 19 von dem Fühler 17 zu einem Warnkontaktstecker 20 führt, der mit einer nicht gezeigten Anzeigeeinrichtung verbunden ist, an der der Abnutzungsgrad des Reibbelages 12 abgelesen werden kann. Mit zunehmendem Verschleiß des Reibbelages 12 verschiebt sich die Bremsbacke 8 in Richtung zur Bremssscheibe hin, weshalb der elektrische Leiter oder Warndraht 19 lang genug bemessen sein muß, um dieser Bewegung folgen zu können. Damit der Warndraht 19 nicht an die Bremsscheibe oder eine nicht dargestellte Radfelge gelangen und dort beschädigt oder zerstört werden kann, wird er durch eine Öse 21 geführt, die auf einem Absatz 22 des Gehäuses 2 mittels einer Schraube 23 befestigt ist.

Der Warnkontaktstecker 20 der Reibbelag-Warneinrichtung 18 wird in einen U-förmig nach oben gebogenen Abschnitt 24 einer als Halteblech 25 ausgeformten Halterung gesteckt und dort gehalten, wobei die Halterung 25 durch eine Schraube 26 an einem dafür vorgesehenen Absatz 27 des Gehäuses 2 befestigt ist. An einem oberen Abschnitt 28 des Haltebleches 25 ist erfindungsgemäß ein Masseanschluß 29 vorgesehen.

Der Bremsssattel 1 ist über das Gehäuse 2 an einem nicht dargestellten Achsschenkel eines Kraftfahrzeuges befestigt, so daß über ein ebenfalls nicht gezeigtes Radlager ein Masseschluß zwischen dem Bremssattel 1 und der Bremsscheibe zustande kommt. Der Masseschluß dieser Teile mit der Fahrzeugkarosserie ist nicht gegeben, da die Radaufhängung über Gummilager elastisch und elektrisch isoliert im Achsschenkel gelagert ist. Aus diesem Grunde wird erfindungsgemäß die Bremsscheibe über den Masseanschluß 29 des Halteblechs 25, den Bremsssattel 1 und das Radlager mit Masse versorgt.

Bei Verschleiß des Bremsbelages 12 kommt der Belagverschleißfühler 17 in direkten Kontakt mit der Bremsscheibe, wodurch ein Stromkreis geschlossen und an der Anzeigeeinrichtung die Abnutzung des Reibbelages 12 abgelesen werden kann. Wenn die Bremsscheibe dabei über den Masseanschluß 29 mit der Masse des Kraftfahrzeug-Stromkreises verbunden ist, kann der Warndraht 19 der Reibbelag-Warneinrichtung 18 in besonders vorteilhafter Weise aus lediglich einer Masseleitung bestehen.

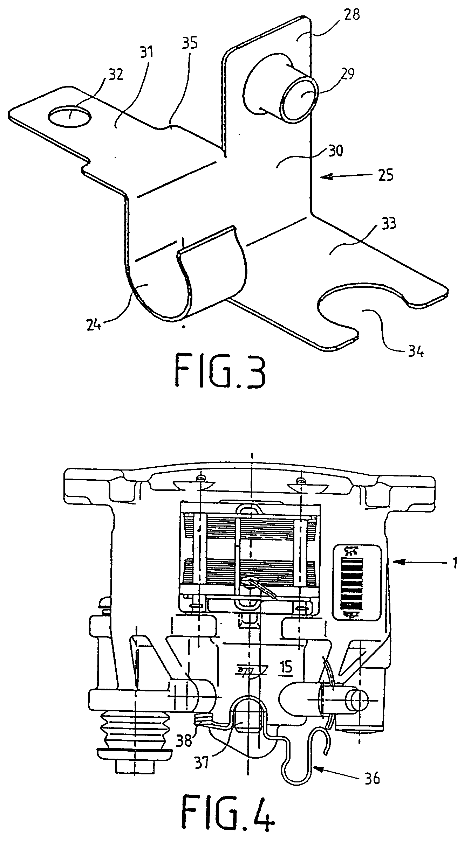

Die genaue Form des erfindungsgemäßen Halteblechs 25 ist in Fig. 3 perspektivisch dargestellt. Das zweckmäßigerweise aus Blech gestanzte und anschließend gebogene Halteblech 25 umfaßt den Halteabschnitt 24 für den Warnkontaktstecker 20, den oberen Abschnitt 28 mit einem vorzugsweise einstückig daraus gezogenen Masseanschluß 29, einen Basisabschnitt 30, einen Befestigungsabschnitt 31 mit einer Bohrung 32 sowie einen weiteren Halteabschnitt 33, an dessen Ende sich eine halbkreisförmige Öffnung 34 befindet. Das Halteblech 25 wird mittels der durch die Öffnung 32 greifenden Schraube 26 am eigens dafür vorgesehenen Gehäuseabsatz 27 befestigt. Dabei ist der sich rechtwinklig zum Basisabschnitt 30 nach hinten erstreckende Befestigungsabschnitt 31 eben ausgebildet und weist zur Verringerung der Auflagefläche zwei Absätze 35 auf, hinter denen sich seine Breite reduziert. Der Abschnitt 24 ist aus einem Teil des Basisabschnittes 30 U-förmig nach oben gebogen und dient durch seine runde Form zur kraft- und formschlüssigen sicheren Halterung des Warnkontaktsteckers 20. Der sich ebenfalls rechtwinklig vom Basisabschnitt 30 in entgegengesetzte Richtung zum Befestigungsabschnitt 31 erstrekkende Halteabschnitt 33 kann durch seine Öffnung 34 ein ABS-Kabel oder ein anderes Kabel aufnehmen. Dabei sind die Halteabschnitte 24 und 33 so am Halteblech 25 angeordnet, daß eine optimale Aufnahme der zu haltenden Teile ermöglicht wird. Es ist als Weiterführung dieser Ausführungsform des Halteblechs 25 denkbar, an den Seiten des Abschnittes 33 nicht gezeigte weitere Öffnungen zur Aufnahme zusätzlicher Kabel oder Schläuche anzubringen.

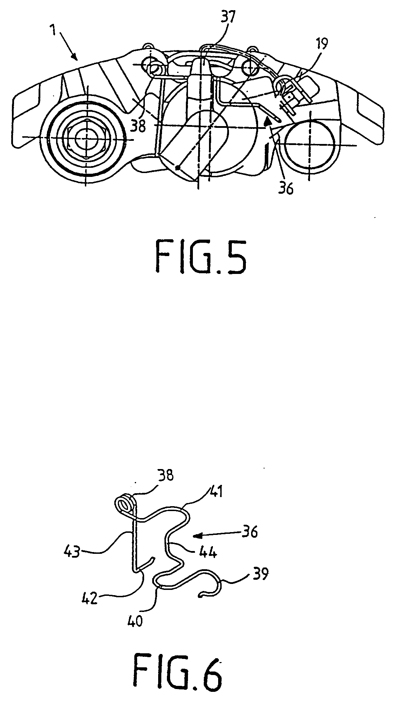

In den Fig. 4 und 5 ist analog zu Fig. 1 und 2 eine Drauf- und eine Seitenansicht einer anderen Ausführungsform des Bremssattels 1 dargestellt. Als Halterung für den Warnkontaktstecker 20 dient ein Drahtclip 36, der hinter einen Vorsprung 37 des Zylinders 15 geklemmt wird und einen erfindungsgemäßen Masseanschluß 38 aufweist. Durch die klemmende Halterung des Drahtclips 36 kann mit Vorteil auf eine Bearbeitung des Gehäuses, wie beispielsweise das Anbringen eines Gewindesackloches für die Schraube 26, verzichtet werden.

Der bevorzugt aus Federdraht gebogene Drahtclip 36 wird in Fig. 6 perspektivisch gezeigt. Dabei weist der Federdrahtclip 36 neben dem durch mehrere kreisförmige Schlaufen gebildeten Masseanschluß 38 einen halbkreisförmigen Halteabschnitt 39 für den Warnkontaktstecker 20 und einen weiteren halbkreisförmigen Halteabschnitt 40 für ein nicht dargestelltes ABS-Kabel auf, wobei die Abschnitte 39, 40 wiederum so am Federdrahtclip 36 angeordnet sind, daß eine optimale Aufnahme und Halterung des Steckers 20 bzw. des ABS-Kabels ermöglicht wird. Zur Befestigung am Vorsprung 37 bzw. am Sattelgehäuse 2 sind eine Schlaufe 41 und ein das Gehäuse 2 hintergreifender Vorsprung 42 vorgesehen. Die einzelnen Abschnitte 38, 39, 40, 41 und 42 sind über Stege 43, 44 miteinander verbunden, so daß der Drahtclip 36 aus einem einzigen Stück Federdraht gebogen werden kann.

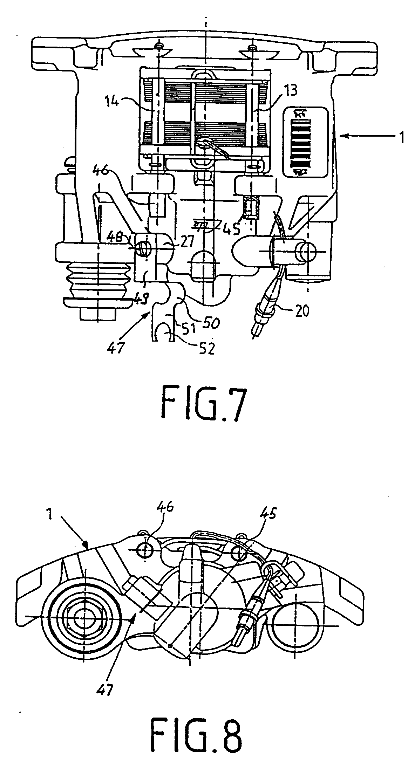

Ein Draufsicht und eine Seitenansicht einer weiteren Ausführungsform eines Bremssattels 1 ist in den Fig. 7 und 8 dargestellt. Erfindungsgemäß ist dabei im Unterschied zu den bisherigen Ausführungsformen zumindest ein Masseanschluß 45, 46 an den Belaghaltestiften 13, 14 vorgesehen, wobei der Masseanschluß 45, 46 bevorzugt durch Aufbohren der inneren Enden der Haltestifte 13, 14 hergestellt wird. Da die in Fig. 7 und 8 gezeigten Haltestifte 13, 14 einen zu geringen Durchmesser besitzten, weisen sie an ihren inneren Enden jeweils einen Absatz mit einem größeren Durchmesser auf, in dem die Masseansclüsse 45, 46 mit einer genügenden Restwandstärke eingebracht werden können. Ein Haltewinkel 47 für den Warnkontaktstecker 20 ist mittels einer Schraube 48 über einen Abschnitt 49 am Gehäuseabsatz 27 befestigt. Durch das Vorsehen der Masseanschlüsse 45, 46 an den Haltestiften 13 und 14 umfaßt der Haltewinkel 47 keinen eigenen Masseanschluß mehr, ist jedoch wie oben mit einem Halteabschnitt 50 für den Warnkontaktstekker 20 und einem Halteabschnitt 51 mit einer Öffnung 52 zur Halterung eines ABS-Kabels versehen.

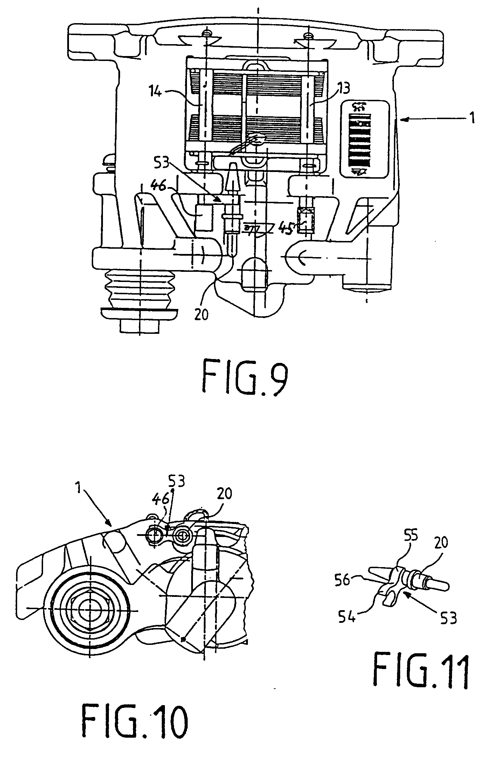

In Fig. 9 und 10 wird in einer Drauf- bzw. Seitenansicht eine weitere Ausführungsform des Bremssattels 1 gezeigt. Dabei sind die Masseanschlüsse 45, 46 analog zur vorherigen Ausführungsform an Absätzen der Haltestifte 13, 14 angebracht, die einen größeren Durchmesser als die Haltestifte 13, 14 aufweisen. Bei dieser Ausführungsform bleibt jedoch im Unterschied zur vorherigen zwischen diesen Absätzen und der Befestigung der Haltestifte 13, 14 am Sattelgehäuse 2 jeweils ein Haltestiftabschnitt frei, an dem ein Halteclip 53 befestigt ist.

Dieser in Fig. 11 perspektivisch dargestellte maulschlüsselförmige und zweckmäßigerweise aus Kunststoff hergestellte Halteclip 53 umfaßt einen Abschnitt 54 zur Befestigung mit einem der Haltestifte 13, 14 und einen Abschnitt 55 zur Aufnahme des Warnkontaktsteckers 20, wobei beide Abschnitte 54, 55 durch einen Steg 56 miteinander verbunden sind.

### Bezugszeichenliste

- 1: Bremssattel
- 2: Gehäuse
- 3: Gehäuseschenkel
- 4: Brückenabschnitt
- 5: Brückenabschnitt
- 6: Brückenschacht
- 7: Bremsbacke
- 8: Bremsbacke
- 9: Trägerplatte
- 10: Trägerplatte
- 11: Reibbelag
- 12: Reibbelag
- 13: Haltestift
- 14: Haltestift
- 15: Hydraulikzylinder
- 16: Feder
- 17: Belagverschleißfühler
- 18: Reibbelag-Warneinrichtung
- 19: Warndraht
- 20: Warnkontaktstecker
- 21: Öse
- 22: Gehäuseabsatz
- 23: Schraube
- 24: Halteabschnitt
- 25: Halteblech
- 26: Schraube
- 27: Gehäuseabsatz
- 28: Halteblechabschnitt
- 29: Masseanschluß
- 30: Basisabschnitt
- 31: Befestigungsabschnitt
- 32: Bohrung
- 33: Halteabschnitt
- 34: Öffnung
- 35: Absatz
- 36: Federdrahtclip
- 37: Vorsprung
- 38: Masseanschluß
- 39: Halteabschnitt
- 40: Halteabschnitt
- 41: Schlaufe
- 42: Vorsprung
- 43: Steg
- 44: Steg
- 45: Masseanschluß
- 46: Masseanschluß
- 47: Haltewinkel
- 48: Schraube
- 49: Befestigungsabschnitt
- 50: Halteabschnitt
- 51: Halteabschnitt
- 52: Öffnung
- 53: Halteclip
- 54: Befestigungsabschnitt
- 55: Halteabschnitt
- 56: Steg

## Patentansprüche

1. Bremssattel für Teilbelagscheibenbremsen, insbesondere für Kraftfahrzeuge, mit einem Gehäuse (2, 3, 4, 5), zwei Bremsbacken (7, 8) und einer Reibbelag-Warneinrichtung (18), die eine Abnutzung eines Reibbelages (11, 12) an zumindest einer der Bremsbacken (7, 8) anzeigt und wenigstens einen am Bremssattel (1) geführten eklektrischen Leiter (19) aufweist, der von der zumindest einen Bremsbacke (7, 8) über einen Warnkontaktstecker (20) zu einer Anzeigeeinrichtung führt, wobei der Bremssattel (1) eine Halterung (25, 36, 47, 53) für zumindest den Warnkontaktstecker (20) umfaßt, dadurch **gekennzeichnet**, daß der Bremssattel (1) wenigstens einen Masseanschluß (29, 38, 45, 46) aufweist.

2. Bremssattel nach Anspruch 1, dadurch **gekennzeichnet,** daß der Masseanschluß (29, 38) an der Halterung (25, 36) für den Warnkontaktstecker (20) ausgebildet ist.

3. Bremssattel nach Anspruch 1 und 2, dadurch **gekennzeichnet,** daß die Halterung als gestanztes und gebogenes Halteblech (25) ausgebildet ist.

4. Bremssattel nach Anspruch 3, dadurch **gekennzeichnet,** daß das Halteblech (25) einen Basisabschnitt (30) mit einem an dessen oberen Abschnitt (28) angeordneten Masseanschluß (29), einen sich vorzugsweise rechtwinklig zum Basisabschnitt (30) erstreckenden Befestigungsabschnitt (31) mit einer Bohrung (32), einen aus einem Teil des Basisabschnittes (30) U-förmig gebogenen Halteabschnitt (24) für den Warnkontaktstecker (20) und einen sich vorzugsweise rechtwinklig zum Basisabschnitt (30) in entgegengesetzte Richtung zum Befestigungsabschnitt (31) erstreckenden Halteabschnitt (33) umfaßt, der zumindest eine halbkreisförmige Öffnung (34) zur Halterung eines Kabels, insbesondere eines ABS-Kabels, aufweist.

5. Bremssattel nach Anspruch 1 und 2, dadurch **gekennzeichnet,** daß die Halterung als gebogener Federdrahtclip (36) ausgebildet ist.

6. Bremssattel nach Anspruch 5, dadurch **gekennzeichnet,** daß der Federdrahtclip (36) einen durch mehrere kreisförmige Schlaufen gebildeten Masseanschluß (38), einen halbkreisförmigen Halteabschnitt (39) für den Warnkontaktstecker (20), zumindest einen weiteren halbkreisförmigen Halteabschnitt (40), insbesondere für ein ABS-Kabel, sowie eine halbkreisförmige Schlaufe (41) und einen Vorsprung (42) zur Befestigung des Drahtclips (36) am Bremssattel (1) umfaßt, wobei die einzelnen Abschnitte (38, 39, 40, 41, 42) durch Stege (43, 44) miteinander verbunden sind.

7. Bremssattel nach Anspruch 1, dadurch **gekennzeichnet,** daß der Masseanschluß (45, 46) an zumindest einem der Belaghaltestifte (13, 14) ausgebildet ist.

8. Bremsssattel nach Anspruch 1 und 7, dadurch **gekennzeichnet,** daß der Masseanschluß (45, 46) mittels einer Bohrung in zumindest einem der Haltestifte (13, 14) angebracht ist.

9. Bremssattel nach Anspruch 8, dadurch **gekennzeichnet,** daß als Halterung für den Warnkontaktstecker (20) ein aus Blech gestanzter und gebogener Haltewinkel (47) vorgesehen ist, der einen Befestigungsabschnitt (49), einen U-förmig gebogenen Halteabschnitt (50) für den Warnkontaktstecker (20) und einen weiteren Halteabschnitt (51) mit zumindest einer halbkreisförmigen Öffnung (52), insbesondere zur Halterung eines ABS-Kabels, umfaßt.

10. Bremssattel nach Anspruch 8, dadurch **gekennzeichnet,** daß als Halterung für den Warnkontaktstecker (20) ein maulschlüsselförmiger Halteclip (53) mit einem Befestigungsabschnitt (54) und einem Halteabschnitt (55) vorgesehen ist, wobei der Befestigungsabschnitt (54) auf einen der Belaghaltestifte (13, 14) gesteckt wird und der Halteabschnitt (55) zur Halterung des Warnkontaktsteckers (20) dient.
